# EUROPÄISCHE PATENTSCHRIFT

(11) **EP 2 517 905 B1**
(45) Veröffentlichungstag und Bekanntmachung des Hinweises auf die Patenterteilung: **20.11.2013**
(21) Anmeldenummer: 12002808.9
(22) Anmeldetag: 21.04.2012
(51) Int. Cl.: B60G 21/055, B60G 17/02, B60G 11/18, B60G 11/20

(54) **Federungsanordnung für Radaufhängungen von Kraftfahrzeugen**
Suspension assembly for wheel suspensions in motor vehicles
Agencement de ressort pour suspensions de roues de véhicules automobiles

(30) Priorität: 26.04.2011 DE 102011018574
(43) Veröffentlichungstag der Anmeldung: 31.10.2012
(73) Patentinhaber: Audi AG, 85045 Ingolstadt (DE)
(72) Erfinder: Michel, Wilfried, 93339 Riedenburg (DE)
(74) Vertreter: Asch, Konrad

(56) Entgegenhaltungen:
- DE-A1-102007 024 770
- DE-A1-102009 005 895
- DE-A1-102009 005 898
- DE-A1-102009 005 899
- FR-A1- 2 437 311
- JP-A- 2008 302 731
- US-A- 5 277 450
- US-A1- 2005 167 932

## Beschreibung

Die vorliegende Erfindung betrifft eine Federungsanordnung für Radaufhängungen von Kraftfahrzeugen gemäß dem Oberbegriff des Patentanspruchs 1.

Eine solche Federungsanordnung ist beispielhaft aus der DE 10 2009 005 899 A1 und auch aus der DE 10 2009 005 895 A1 bekannt. Die Federungsanordnung weist eine mittels eines Aktuators betätigbare Drehstabfeder auf, die sich in der Fahrzeugquerrichtung bis etwa in die Fahrzeugquermitte erstreckt und radseitig auf einen Antriebshebel wirkt, der wiederum an einem Radführungselement der Radaufhängung angelenkt ist. In der DE 10 2009 005 899 A1 ist die Drehstabfeder mehrteilig sowie in verschachtelter Anordnung ausgeführt, bei der zwei radial äußere Hohlstäbe sowie ein radial innenliegender Vollstab aus Federstahl vorgesehen sind, die über zum Beispiel Keilverzahnungen miteinander kraftübertragend verbunden sind.

In dem aus der DE 10 2009 005 899 A1 bekannten Drehfedersystem wird die Federarbeit im Wechselspiel der Ein- und Ausfederbewegung des Rades aufgenommen bzw. abgegeben. Gleichzeitig ist es möglich, mittels des Aktuators Momente zu überlagern, das heißt die Drehfedern je nach Erfordernis aufzuziehen oder zu entspannen. Durch das Vorhandensein der Tragfeder als eine Hauptfeder müssen mit dem Drehsteller nur anteilig Stellkräfte zur Radlaständerung gestellt werden. Es findet ständig eine Überlagerung der Federkräfte aus Hauptfeder und Drehfeder statt, und zwar je nach dem wie die Fahrsituation dies erfordert und die Steuerung dies vorgibt. Am Ausgang des Drehfedersystems befindet sich eine Schwinge, an deren Ende eine Koppel angelenkt ist. Die Koppel verbindet die Schwinge mit dem Trapezlenker, der mit dem Fahrzeugrad verbunden ist. Somit können die im Drehsteller erzeugten Drehmomente über den Lastpfad Motor/Getriebe/- Drehfeder/Schwinge/Koppel/Trapezlenker/Fahrzeugrad letztlich als lineare Stellkräfte auf das Fahrzeugrad übertragen werden.

Bei dem oben dargelegten Drehfedersystem sind die Drehsteller jeweils seitlich an einer Quertraverse eines Hilfsrahmens montiert. Zur Erzeugung der Stellbewegung am Fahrzeugrad wird mittels des Elektromotors ein Drehmoment erzeugt, mit dem das Drehfedersystem verspannt wird. Dadurch ergeben sich je nach Fahrsituation unterschiedliche Lastfälle, die zu unterschiedlichen Beanspruchungen des Hilfsrahmenquerträgers auf Biegung und auf Torsion führen. Die sich daraus ergebenden räumlichen, dreiachsigen Spannungszustände machen es erforderlich, dass der Hilfsrahmentraverse bei Einsatz eines solchen aktiven Federungssystems verstärkt werden muss. Eine solche Verstärkung des Hilfsrahmens ist jedoch aufgrund der beengten Bauraumverhältnisse problematisch.

Aus der JP 2008 302 731 A ist eine Radaufhängung bekannt, die ein aktives Drehfedersystem aufweist. Das Drehfedersystem weist einen linksseitigen und einen rechtsseitigen Drehsteller auf. Die beiden Drehsteller sind über ein mittleres Verbindungsstück miteinander verbunden. Das Verbindungsstück ist wiederum an einer fahrzeugseitigen Blattfeder angebunden.

Die Aufgabe der Erfindung besteht darin, eine Federungsanordnung für Radaufhängungen an einer Fahrzeugachse bereitzustellen, bei der die sich im Drehsteller-Betrieb ergebenden Torsions- und Biegekräfte betriebssicher aufgenommen werden können.

Die Aufgabe ist durch die Merkmale des Patentanspruches 1 gelöst. Bevorzugte Weiterbildungen der Erfindung sind in den Unteransprüchen offenbart.

Gemäß dem kennzeichnenden Teil des Patentanspruches 1 sind die beiden Drehsteller-Gehäuse der Federungsanordnung über einen hohlzylindrischen Verbindungsträger miteinander verbunden. Die Drehsteller sind derart positioniert, dass sich deren Rohrfedern zusammen mit den radial inneren Vollstäben der Drehstabfedern zumindest teilweise in das Hohlprofil des hohlzylindrischen Verbindungsträgers hinein erstrecken.

Mit Hilfe des Verbindungsträgers wird zusätzlich zur Hilfsrahmenquertraverse ein weiterer Kraftpfad bereitgestellt, wodurch die im Drehsteller-Betrieb erzeugten Torsions- und -Biegekräfte nicht mehr allein in ein fahrzeugaufbauseitiges Trägerelement, das heißt der Hilfsrahmentraverse, eingeleitet werden, sondern zumindest teilweise auch in den Verbindungsträger eingeleitet werden. Die Hilfsrahmentraverse muss daher bei Einsatz eines aktiven Drehfedersystems nicht angepasst werden. Stattdessen wird die Hilfsrahmentraverse durch den Verbindungsträger, der zwischen dem linken und rechten Drehsteller angeordnet ist, entlastet. Die Bauraumverhältnisse lassen eine solche Anordnung des Verbindungsträgers ohne weiteres zu, da ausreichend Platz zwischen den beiden Drehsteller-Gehäusen vorhanden ist. Das geschachtelte Drehfedersystem ragt daher, wie bereits oben erwähnt, zumindest teilweise in das Innere des Verbindungsträgers. Der Verbindungsträger selbst kann mit im Vergleich zur Hilfsrahmentraverse geringeren Abmessungen ausgeführt werden. Hier ist denkbar, den Querschnitt des Verbindungsträgers entsprechend dem Außendurchmesser der beiden einander spiegelbildlich gegenüberliegenden Drehsteller-Gehäusen zu gestalten. Da das, im Drehsteller-Betrieb sich ergebende polare Widerstandsmoment aufgrund großen Durchmessers von vorne herein bereits günstig ist, könnte auch die Wanddicke des Verbindungsträgers entsprechend dünn gestaltet sein, wodurch sich ein erheblicher Gewichtsvorteil ergibt. Dies führt zu einem gewichtsneutralen Ergebnis, sofern man im Vergleich dazu ein entsprechend verstärkte Hilfsrahmentraverse heranziehen würde. Der Grundgedanke der Erfindung besteht also in der Entlastung der Hilfsrahmentraverse durch Einleitung der sich ergebenden Betriebskräfte/- momente in einen separaten Biege- und Torsionsträger. Die Erfindung ist sowohl für Vorder- als auch für Hinterachsen anwendbar.

Für eine einwandfreie Krafteinleitung von den beiden Drehsteller-Gehäusen kann der Verbindungsträger bevorzugt über eine starre Bauteilverbindung mit den beiden Drehsteller-Gehäusen verbunden sein. Bevorzugt kann der Verbindungsträger seitliche Anschlussflansche aufweisen, die in Schraubverbindung mit den Drehsteller-Gehäusen sind. Der Verbindungssteller kann darüber hinaus bevorzugt in einer Zwei-Punkt-Anbindung lediglich an den beiden seitlich äußeren Drehsteller-Gehäusen befestigt sein, während sich der Verbindungsträger zwischen den beiden Drehsteller-Gehäusen durchgängig ohne zusätzlichen Anbindungspunkt, das heißt anbindungsfrei, erstreckt.

Die beiden Drehsteller können in der Fahrzeugquerrichtung seitlich außen an der Hilfsrahmentraverse angeordnet sein. Dabei sind die Drehsteller-Gehäuse bevorzugt starr mit der Hilfsrahmentraverse verschraubt.

In einer weiteren Ausführungsform kann die Hilfsrahmentraverse ein Hohlprofil aufweisen, in dem zumindest teilweise die oben dargelegte Drehstelleranordnung angeordnet sein kann. Die Drehsteller-Gehäuse können hierbei bevorzugt innerhalb des Hohlprofils der Hilfsrahmentraverse montiert sein. Von Vorteil ist es hierbei, wenn die jeweiligen Drehsteller-Gehäuse an den gegenüberliegenden Wänden der Hilfsrahmentraverse befestigt sind. Die Drehstabfedern der Drehstelleranordnung können hierbei durch seitliche Durchbrüche in der Hilfsrahmentraverse herausragen und über die Antriebshebel auf die jeweiligen Radführungselemente wirken.

Die vorstehend erläuterten und/oder in den Unteransprüchen wiedergegebenen vorteilhaften Aus- und/oder Weiterbildungen der Erfindung können - außer zum Beispiel in den Fällen eindeutiger Abhängigkeiten oder unvereinbarer Alternativen - einzeln oder aber auch in beliebiger Kombination miteinander zur Anwendung kommen.

Die Erfindung und ihre vorteilhaften Aus- und Weiterbildungen sowie deren Vorteile werden nachfolgend anhand von Zeichnungen näher erläutert.

Es zeigen:
- Fig. 1: in einer grob schematischen Ansicht von oben eine Hinterachse eines Kraftfahrzeuges;
- Fig. 2: die Hinterachse in einer perspektivischen Darstellung;
- Fig. 3: in einer perspektivischen Darstellung die Hinterachse des Fahrzeugs gemäß einem zweiten Ausführungsbeispiel; und
- Fig. 4: eine Schnittdarstellung durch die Hilfsrahmentraverse bei montierter Drehstelleranordnung.

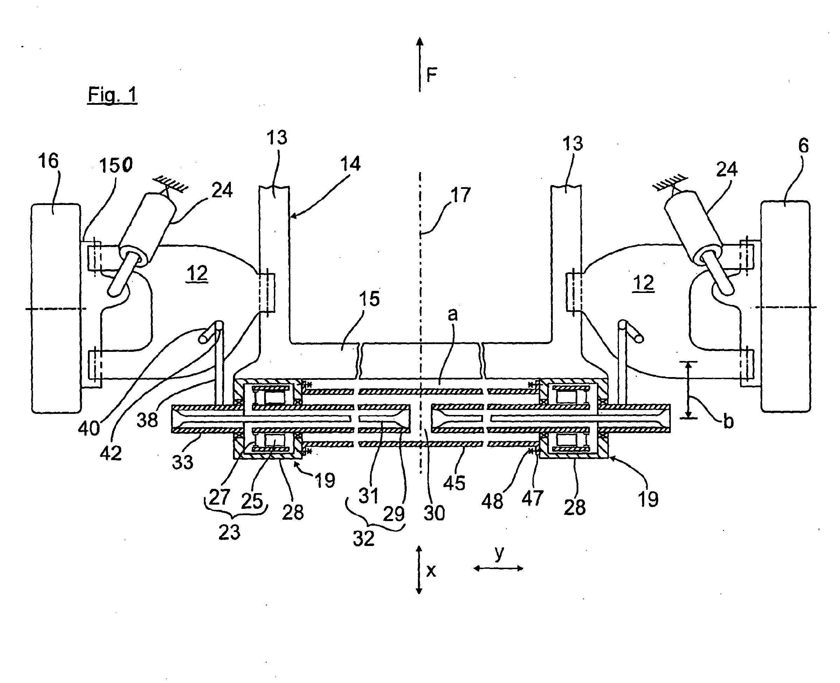

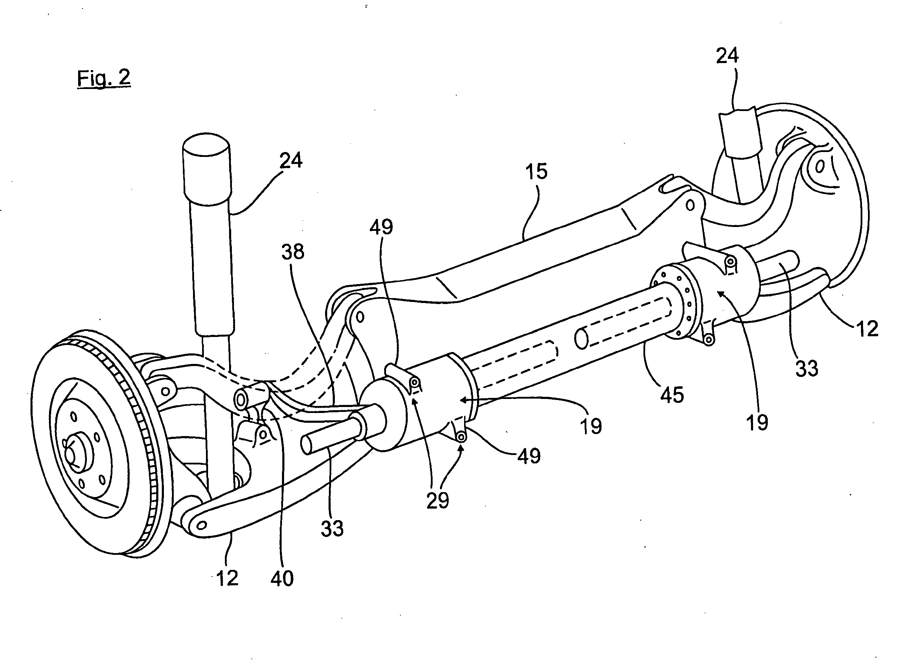

In der Fig. 1 ist die untere Ebene einer linksseitigen sowie rechtsseitigen Radaufhängung einer Hinterachse für ein Kraftfahrzeug gezeigt, und zwar mit jeweils einem unteren Querlenker 12, der einerseits an einem abschnittsweise dargestellten Hilfsrahmen 14 und andererseits an einem angedeuteten Radträger 150 für die Hinterräder 16 angelenkt ist. Der den Radträger 150 führende obere Querlenker ist in der Fig. 1 nicht ersichtlich, sondern nur in der Fig. 2 grob angedeutet.

Die in der Fig. 1 gezeigten Radaufhängungen für die linken und rechten Hinterräder 16 weisen jeweils Stoßdämpfer 24 mit davon getrennter Tragfeder auf, die in den Fig. 1 und 2 nicht gezeigt ist. Gemäß der Fig. 1 weist der Hilfsrahmen 14 jeweils zwei seitliche Längsträger 13 sowie eine in der Fahrzeuglängsrichtung x hintere Quertraverse 15 auf, und ist in nicht dargestellter Weise am Aufbau des Kraftfahrzeuges befestigt. Wie oben bereits angedeutet, sind die Radaufhängungen für die linken und rechten Hinterräder jeweils zur Fahrzeugmittelebene 17 spiegelsymmetrisch ausgeführt.

Wie aus der Fig. 1 weiter hervorgeht, sind in Fahrzeugquerrichtung y seitlich außen an der Hilfsrahmentraverse 15 jeweils baugleich ausgeführte Drehsteller 19 befestigt. Jeder der Drehsteller 19 weist als Aktuator eine Motor-/Getriebeeinheit 23 auf, die sich aus einem Elektromotor 25 und einem Untersetzungsgetriebe 27 zusammensetzt. Das Untersetzungsgetriebe 27 und der Elektromotor 25 sind gemäß der Fig. 1 jeweils in einem gemeinsamen Drehstellergehäuse 28 angeordnet, das mittels, in der Fig. 2 angedeuteten Schraubverbindungen 29 an der Quertraverse 15 des Hilfsrahmens 14 befestigt ist.

Gemäß der Fig. 1 ist das Untersetzungsgetriebe 27 trieblich mit einer Rohrfeder 29 verbunden, die quer nach innen zur Fahrzeugmittelebene 17 geführt ist. Am inneren Ende der Rohrfeder 29 schließt sich kraftschlüssig ein Vollstab 31 an, der gegenläufig radial innerhalb der Rohrfeder 29 quer nach außen geführt ist und an seinem äußeren Ende über eine Steckverbindung mit einer weiteren Rohrfeder 33 kraftschlüssig verbunden ist. Die zweite Rohrfeder 33 ist in dem Drehsteller-Gehäuse 28 drehbar gelagert und trägt einen radial in Richtung auf den Querlenker 12 in Fahrtrichtung F nach vorne abragenden Abtriebshebel 38, der über Lagerstellen 42 und eine etwa vertikal ausgerichtete Koppelstange 40 gelenkig mit dem Querlenker 12 verbunden ist.

Die ersten und zweiten Rohrfedern 29, 33 sowie der sich radial innerhalb der Rohrfedern erstreckende Vollstab 31 sind aus einem Federstahl hergestellt und dementsprechend tordierbar und bilden insgesamt eine Drehstabfeder, mittels der über den Drehsteller 19 Stellkräfte auf den unteren Querlenker 12 ausgeübt werden können. Zudem ist mittels der beiden Rohrfedern 29, 33 und dem darin verlaufenden Vollstab 31 ein geschachteltes Drehfedersystem bereitgestellt, das bei geringem Bauraum eine große wirksame Federlänge ergibt.

Wie aus den Fig. 1 und 2 weiter hervorgeht, sind die beiden Drehsteller-Gehäuse 28 in etwa hohlzylindrisch ausgebildet und Guss-Bauteile, die in der Fahrzeugquerrichtung y zueinander koaxial angeordnet sind. Zwischen den beiden Drehsteller-Gehäusen 28 ist gemäß den Fig. 1 und 2 ein bauteilsteifer Verbindungsträger 45 angeordnet. Der Verbindungsträger 45 ist hohlzylindrisch ausgeführt und weist an seinen beiden Stirnseiten jeweils Anschlussflansche 47 auf, die in Schraubverbindung 48 mit den Drehsteller-Gehäusen 28 sind.

Die beiden Drehsteller-Gehäuse 28 sind gemäß der Fig. 2 umfangsseitig mit jeweils zwei Schraubbutzen 49 versehen, über die die Gehäuse 28 jeweils mit der Hilfsrahmentraverse 15 verschraubt sind. Die Schraubbutzen 49 sind in Fahrzeuglängsrichtung x ausgerichtet und einander gegenüberliegend an der zylindrischen Umfangswand der jeweiligen Drehsteller-Gehäuse 28 angeordnet.

Wie aus der Fig. 1 hervorgeht, erstrecken sich die beiden, der Fahrzeugmitte zugewandten Rohrfedern 29 in das Hohlprofil 30 des Verbindungsträgers 45 hinein. Der Verbindungsträger 45 ist dabei, abgesehen von den stirnseitigen Anbindungspunkten 48 an den Drehsteller-Gehäusen 28, über einen freien Abstand a der Hilfsrahmentraverse 15 nachgelagert.

Mit Hilfe des Verbindungsträgers 45 können die im Drehsteller-Betrieb erzeugten Torsions- und/oder Biegekräfte zumindest teilweise in den Verbindungsträger 45 eingeleitet werden. Dadurch kann im Drehsteller-Betrieb die Hilfsrahmentraverse 15 des Hilfsrahmens 14 entlastet werden. Im Drehsteller-Betrieb sind die sich ergebenden Lastfälle vielgestaltig, was die Richtung des Lastpfades durch die Hilfsrahmentraverse 15 und durch den Verbindungsträger 45 betrifft. Grundsätzlich kann zwischen gleichseitigem und wechselseitigem Federn unterschieden werden.

Bei wechselseitigem Federn würde sich ohne Einsatz des erfindungsgemäßen Verbindungsträgers 45 gegebenenfalls hinsichtlich Biegung ein S-Schlag der Hilfsrahmentraverse 15 und gleichzeitig eine Torsion der Hilfsrahmentraverse 15 ergeben, sofern die Stellkräfte links- sowie rechtsseitig unterschiedlich sind. Mit Hilfe des erfindungsgemäßen Verbindungsträgers 45 kann dagegen einer solchen übermäßigen Biegebeanspruchung der Hilfsrahmenquertraverse 15 entgegengewirkt werden.

Letztendlich werden von den Drehstellern 19 stets die gewollten Stellkräfte am Ende der Abtriebshebel 38 auf die Querlenker 12 ausgeübt, um das Fahrzeugrad 16 je nach Erfordernis aktiv ein- oder ausfedern zu lassen. Dabei kann die auftretende Belastung sowohl vom Fahrzeugrad 16 als auch vom Drehsteller 19 herrühren. Im ersten Fall muss der Drehsteller beim Ein- oder Ausfedern gegenhalten. Im zweiten Fall muss der Drehsteller 19 aktiv stellen.

So ergibt sich bei einem wechselseitigen Federn mit zum Beispiel nahezu gleichen, jedoch entgegen gerichteten Stellkräften links und rechts eine Biegebeanspruchung der Hilfsrahmentraverse 15 sowie des Verbindungsträgers 45, und zwar hervorgerufen durch die Stellkräfte des linken und rechten Drehstellers 19. Bei einem solchen Lastfall ist die Torsionsbeanspruchung des Verbindungsträgers 45 sowie der Hilfsrahmentraverse nicht null, sondern entsteht aufgrund der entgegen gerichteten Stellkräfte ein erhebliches Torsionsmoment, welches erfindungsgemäß nicht nur von der Hilfsrahmentraverse 45, sondern auch von dem Verbindungsträger 45 aufgenommen wird.

Bei dem Lastfall "wechselseitiges Federn" entsteht die Torsionsbeanspruchung der Hilfsrahmenquertraverse 15 sowie des Verbindungsträgers 45 aufgrund der entgegengesetzt gerichteten Stellkräfte des linken und rechten Drehstellers 19. Die Kräfte haben jeweils einen Hebelarm b (Fig. 1) in Bezug auf die Hilfsrahmenquertraverse 15. Das heißt, dass neben der Biegebeanspruchung noch zusätzlich diese Torsionsbeanspruchung von der Hilfsrahmentraverse 15 und vom Verbindungsträger 45 aufgenommen wird.

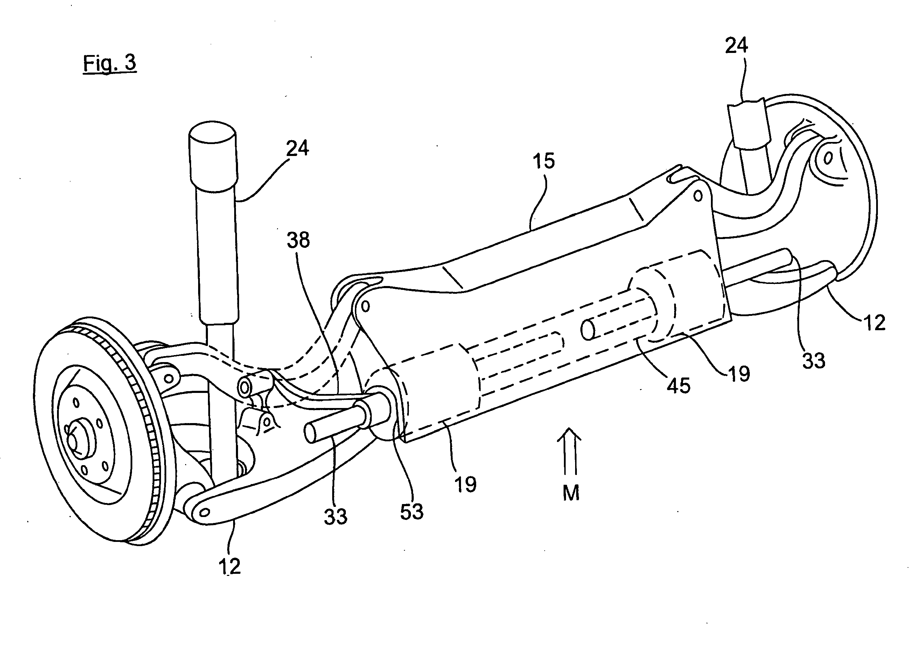

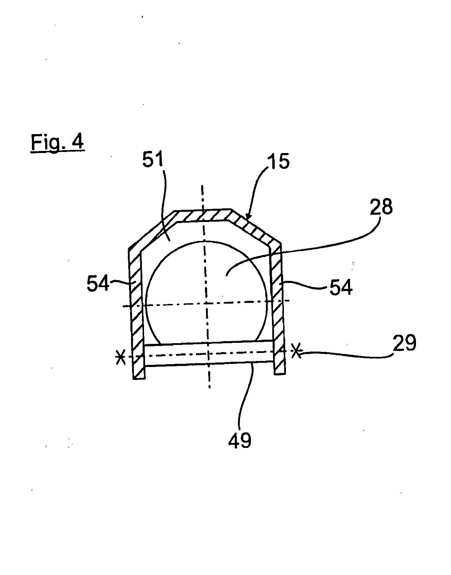

In den Fig. 3 und 4 ist die Drehstelleranordnung, bestehend aus den beiden Drehstellern 19 sowie dem dazwischen angeordneten Verbindungsträger 45 nicht außerhalb der Hilfsrahmentraverse 15 angeordnet, sondern vielmehr innerhalb eines Hohlprofils 51 der Hilfsrahmentraverse 15. Die Hilfsrahmentraverse 15 ist hierzu bodenseitig offen gestaltet. Dadurch kann die Drehstelleranordnung in der Montagerichtung M (Fig. 3) von unten in das Hohlprofil der Hilfsrahmentraverse 15 eingesetzt werden. Die sich jeweils seitlich nach außen erstreckenden Rohrfedern 33 sind in der Zusammenbaulage durch seitliche Durchbrüche 53 in der Hilfsrahmentraverse 15 seitlich nach außen geführt.

Wie aus der Figur 4 weiter hervorgeht, sind die Drehsteller-Gehäuse 28 über Schraubbutzen 49 jeweils an gegenüberliegenden Seitenwänden 54 der Hilfsrahmentraverse 15 innerhalb des Hohlprofils montiert. Dadurch ergibt sich eine im Hinblick auf die Verbindungssteifigkeit besonders vorteilhafte zweischnittige Anbindung (Festigkeitserhöhung), da die Drehsteller-Gehäuse 28 auf diese Weise nicht mehr fliegend außerhalb der Hilfsrahmentraverse gelagert sind.

## Patentansprüche

1. Federungsanordnung für Radaufhängungen an einer Fahrzeugachse, wobei jede Radaufhängung einen Drehsteller (19) mit einer in der Fahrzeugquerrichtung (y) verlaufenden, mit einen Aktuator (23) betätigbaren Drehstabfeder (32) aufweist, von dem eine Rohrfeder (29) quer nach innen zur Fahrzeugmitte geführt ist, an dessen inneres Ende sich ein Vollstab (31) formschlüssig anschließt, der radial innerhalb der Rohrfeder (29) quer nach außen geführt ist und mittelbar oder unmittelbar über einen Abtriebshebel (38) auf ein Radführungselement (12) der Radaufhängung wirkt, **dadurch gekennzeichnet, dass** die beiden Drehsteller-Gehäuse (28) über einen hohlzylindrischen Verbindungsträger (45) miteinander verbunden sind, in dessen Hohlprofil (30) sich die Rohrfedern (29) mit den radial inneren Vollstäben (31) der Drehstabfedern (32) der beiden Drehsteller (19) hinein erstrecken.

2. Federungsanordnung nach Anspruch 1, **dadurch gekennzeichnet, dass** die beiden Drehsteller (19) an einem fahrzeugaufbauseitigen Trägerelement (15), insbesondere an einer Quertraverse (15) eines Hilfsrahmens (14), befestigt sind, und dass insbesondere zur Entlastung des fahrzeugaufbauseitigen Trägerelements (15) die im Drehsteller-Betrieb erzeugten Torsions- und/oder Biegekräfte zumindest teilweise in den Verbindungsträger (45) einleitbar sind.

3. Federungsanordnung nach Anspruch 1 oder 2, **dadurch gekennzeichnet, dass** der Verbindungsträger (45) über eine starre Bauteilverbindung, insbesondere eine Schraubverbindung (48), mit den beiden Drehsteller-Gehäusen (28) verbunden sind.

4. Federungsanordnung nach einem der Ansprüche 1, 2 oder 3, **dadurch gekennzeichnet, dass** sich der Verbindungsträger (45) zwischen den beiden Drehsteller-Gehäusen (28) durchgängig ohne zusätzlichen Anbindungspunkt, das heißt anbindungsfrei, erstreckt.

5. Federungsanordnung nach einem der Ansprüche 2 bis 4, **dadurch gekennzeichnet, dass** die beiden Drehsteller (19) in der Fahrzeugquerrichtung (y) seitlich außen an der Hilfsrahmenquertraverse (15) angeordnet sind.

6. Federungsanordnung nach einem der Ansprüche 2 bis 5, **dadurch gekennzeichnet, dass** die Hilfsrahmenquertraverse (15) ein Hohlprofil aufweist, in dem zumindest teilweise die Drehstelleranordnung angeordnet ist.

7. Federungsanordnung nach Anspruch 6, **dadurch gekennzeichnet, dass** die Drehsteller-Gehäuse (28) innerhalb des Hohlprofils der Hilfsrahmenquertraverse (15) montiert sind.

8. Federungsanordnung nach Anspruch 7, **dadurch gekennzeichnet, dass** die Drehsteller-Gehäuse (28) an gegenüberliegenden Wänden (54) der Hilfsrahmenquertraverse (15) befestigt sind.

9. Federungsanordnung nach Anspruch 6, 7 oder 8, **dadurch gekennzeichnet, dass** die Hilfsrahmenquertraverse (15) in Fahrzeugquerrichtung (y) stirnseitig jeweils Durchbrüche (53) aufweist, durch die die Drehstabfedern (32) seitlich aus dem Hohlprofil der Hilfsrahmenquertraverse (15) geführt sind.

## Claims

1. Suspension assembly for wheel suspensions on a vehicle axis, each wheel suspension comprising a rotary adjuster (19) having a torsion bar spring (32) that extends in the transverse direction (y) of the vehicle and can be actuated by an actuator (23), from which spring a Bourdon tube (29) is guided transversely inwards to the centre of the vehicle, while adjoining the inner end thereof in interlocking engagement is a solid bar (31) that is guided transversely outwards radially within the Bourdon tube (29) and acts directly or indirectly via a driven lever (38) on a wheel guiding element (12) of the wheel suspension, **characterised in that** the two rotary adjuster housings (28) are connected to each other by a hollow cylindrical connecting support (45), into the hollow profile (30) of which the Bourdon tubes (29) extend with the radially inner solid bars (31) of the torsion bar springs (32) of the two rotary adjusters (19).

2. Suspension assembly according to claim 1, **characterised in that** the two rotary adjusters (19) are attached to a support element (15) on the vehicle body side, particularly on a transverse cross-member (15) of an auxiliary frame (14), and **in that** in particular in order to relieve the support element (15) on the vehicle body side the torsional and/or bending forces produced during operation of the rotary adjusters can be at least partially introduced into the connecting support (45).

3. Suspension assembly according to claim 1 or 2, **characterised in that** the connecting support (45) is connected to the two rotary adjuster housings (28) through a rigid component connection, particularly a screw connection (48).

4. Suspension assembly according to one of claims 1, 2 or 3, **characterised in that** the connecting support (45) extends continuously between the two rotary adjuster housings (28) with no additional connecting points, i.e. free from attachments.

5. Suspension assembly according to one of claims 2 to 4, **characterised in that** the two rotary adjusters (19) are arranged in the transverse direction (y) of the vehicle laterally on the outside of the auxiliary frame transverse cross-member (15).

6. Suspension assembly according to one of claims 2 to 5, **characterised in that** the auxiliary frame transverse cross-member (15) comprises a hollow profile in which the rotary adjuster arrangement is at least partially disposed.

7. Suspension assembly according to claim 6, **characterised in that** the rotary adjuster housings (28) are mounted inside the hollow profile of the auxiliary frame transverse cross-member (15).

8. Suspension assembly according to claim 7, **characterised in that** the rotary adjuster housings (28) are attached to opposing walls (54) of the auxiliary frame transverse cross-member (15).

9. Suspension assembly according to claim 6, 7 or 8, **characterised in that** the auxiliary frame transverse cross-member (15) comprises, in the transverse direction (y) of the vehicle, end-face apertures (53), through which the torsion bar springs (32) are passed laterally out of the hollow profile of the auxiliary frame transverse cross-member (15).

## Revendications

1. Aménagement d'amortissement pour suspensions de roues sur un essieu de véhicule, dans lequel chaque suspension de roues présente un actionneur rotatif (19) avec un ressort à barre de torsion (32) s'étendant dans la direction transversale (y) du véhicule et susceptible d'être commandé par un actionneur (23), par lequel est guidé transversalement vers l'intérieur en direction du centre du véhicule un tube-ressort (29), à l'extrémité interne duquel se raccorde mécaniquement une barre pleine (31) qui est guidée radialement à l'intérieur du tube-ressort (29) transversalement vers l'extérieur et agit indirectement ou directement via un levier d'entraînement sur un élément guide-roue (12) de la suspension de roues, **caractérisé en ce que** les deux boîtiers d'actionneurs rotatifs (28) sont reliés l'un à l'autre via une poutrelle de liaison cylindrique creuse (45) dans le profilé creux (30) de laquelle s'étendent les tubes-ressorts (29) avec les barres pleines radialement internes (31) des ressorts à barre de torsion (32) des deux actionneurs rotatifs (19).

2. Aménagement d'amortissement selon la revendication 1, **caractérisé en ce que** les deux actionneurs rotatifs (19) sont fixés à un élément de support (15) côté structure du véhicule, en particulier à une traverse (15) d'un châssis auxiliaire (14), et **en ce que**, notamment pour décharger l'élément de support (15) côté structure du véhicule, les forces de torsion et/ou de flexion produites lors du fonctionnement des actionneurs rotatifs peuvent être transférées au moins en partie dans la poutrelle de liaison (45).

3. Aménagement d'amortissement selon la revendication 1 ou la revendication 2, **caractérisé en ce que** la poutrelle de liaison (45) est reliée aux boîtiers (28) des deux actionneurs rotatifs via une liaison structurelle rigide, en particulier une liaison à vis (48).

4. Aménagement d'amortissement selon l'une quelconque des revendications 1, 2 ou 3, **caractérisé en ce que** la poutrelle de liaison (45) s'étend entre les boîtiers (28) des deux actionneurs rotatifs généralement sans point d'attache supplémentaire, c'est-à-dire sans attache.

5. Aménagement d'amortissement selon l'une quelconque des revendications 2 à 4, **caractérisé en ce que** les deux actionneurs rotatifs (19) sont aménagés dans la direction transversale (y) du véhicule latéralement à l'extérieur sur la traverse (15) du châssis auxiliaire.

6. Aménagement d'amortissement selon l'une quelconque des revendications 2 à 5, **caractérisé en ce que** la traverse (15) du châssis auxiliaire présente un profilé creux dans lequel l'aménagement des actionneurs rotatifs est disposé au moins en partie.

7. Aménagement d'amortissement selon la revendication 6, **caractérisé en ce que** les boîtiers (28) des actionneurs rotatifs sont montés dans le profilé creux de la traverse (15) du châssis auxiliaire.

8. Aménagement d'amortissement selon la revendication 7, **caractérisé en ce que** les boîtiers (28) des actionneurs rotatifs sont fixés sur des parois opposées (54) de la traverse (15) du châssis auxiliaire.

9. Aménagement d'amortissement selon la revendication 6, 7 ou 8, **caractérisé en ce que** la traverse (15) du châssis auxiliaire présente dans la direction transversale (y) du véhicule à l'avant respectivement des découpes (53) par lesquelles les ressorts à barre de torsion (32) sont guidés latéralement hors du profilé creux de la traverse (15) du châssis auxiliaire.
